# EUROPEAN PATENT APPLICATION

(11) **EP 2 757 774 A1**
(43) Date of publication of application: **23.07.2014**
(21) Application number: 14152058.5
(22) Date of filing: 22.01.2014
(51) Int. Cl.: H04N 5/232

(54) **Image capture methods and systems**

(30) Priority: 22.01.2013 US 201313746952
(71) Applicant: HTC Corporation, New Taipei City 231 (TW)
(72) Inventor: Lee, Tsung-Yin, 231 New Taipei City (TW); Tseng, Hsu-Hsiang, 231 New Taipei City (TW); Wang, Chen-Yu, 231 New Taipei City (TW)
(74) Representative: Ljungberg, Robert

(57) **Abstract**

Image capture methods and systems are provided. A definition of a specific region in a preview area is received. At least one preview image is captured via an image capture unit of the electronic device. It is determined whether a specific object exists in the preview image using an object recognition algorithm. If a specific object exists in the preview image, it is determined whether at least a predefined percentage of the specific object is within the specific region. If at least the predefined percentage of the specific object is within the specific region, the electronic device is enabled to perform a photography process to obtain an image via the image capture unit.

## Description

### BACKGROUND OF THE INVENTION

### Field of the Invention

The disclosure relates generally to image capture methods and systems, and, more particularly to methods and systems that automatically capture images when at least one object is positioned at a region predefined in the preview area.

### Description of the Related Art

Recently, portable devices, such as handheld devices, have become more and more technically advanced and multifunctional. For example, a handheld device may have telecommunications capabilities, e-mail message capabilities, an advanced address book management system, a media playback system, and various other functions. Due to increased convenience and functions of the devices, these devices have become necessities of life.

Currently, a handheld device may provide image capturing (picture-taking) capabilities operating like a digital camera, and picture takers can use the image capturing (picture-taking) capabilities of the device to take self-photo, such that picture takers can be included in the image.

Generally, in a handheld device, such as a mobile phone, a camera is always set at the rear side of the device. For example, a camera is always set at the reverse side to a display unit of the device. If a user wants to use the camera to take self-photo (a photo with the picture taker himself), it is difficult to accurately catch good angle and face range to get good self-photo performance since the user cannot see the preview image on the display unit. The burdensome processes of repeated shots may sometimes result in a poorer image outcome by the image subjects, as displeasure to the process is revealed on their faces.

### BRIEF SUMMARY OF THE INVENTION

Image capture methods and systems are provided.

In an embodiment of an image capture method, a definition of a specific region in a preview area is received. At least one preview image is captured via an image capture unit of an electronic device. It is determined whether a specific object exists in the preview image using an object recognition algorithm. If a specific object exists in the preview image, it is determined whether at least a predefined percentage of the specific object is within the specific region. If at least the predefined percentage of the specific object is within the specific region, the electronic device is enabled to perform a photography process to obtain an image via the image capture unit.

An embodiment of an image capture system includes an image capture unit and a processing unit. The image capture unit captures at least one preview image. The processing unit receives a definition of a specific region in a preview area. The processing unit determines whether a specific object exists in the preview image using an object recognition algorithm. If a specific object exists in the preview image, The processing unit determines whether at least a predefined percentage of the specific object is within the specific region. If at least the predefined percentage of the specific object is within the specific region, the processing unit enables an electronic device to perform a photography process to obtain an image via the image capture unit.

In some embodiments, the specific object comprises a face, and the object recognition algorithm is used to recognize whether at least a face is within the preview image.

In some embodiments, voices are generated based on an appearance percentage of the specific object appeared in the specific region. In some embodiments, the voice comprises a beep sound. In some embodiments, a frequency of the beep sound is higher when the appearance percentage is higher, and when the appearance percentage reaches the predefined percentage, the beep sound is sustained.

Image capture methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:
Fig. 1 is a schematic diagram illustrating an embodiment of an image capture system of the invention;
Fig. 2 is a flowchart of an embodiment of an image capture method of the invention;
Fig. 3 is a flowchart of another embodiment of an image capture method of the invention;
Fig. 4 is a schematic diagram illustrating an example of specific region defined in the preview area; and
Figs. 5A and 5B are schematic diagrams illustrating examples of image capture of the invention.

### DETAILED DESCRIPTION OF THE INVENTION

Image capture methods and systems are provided.

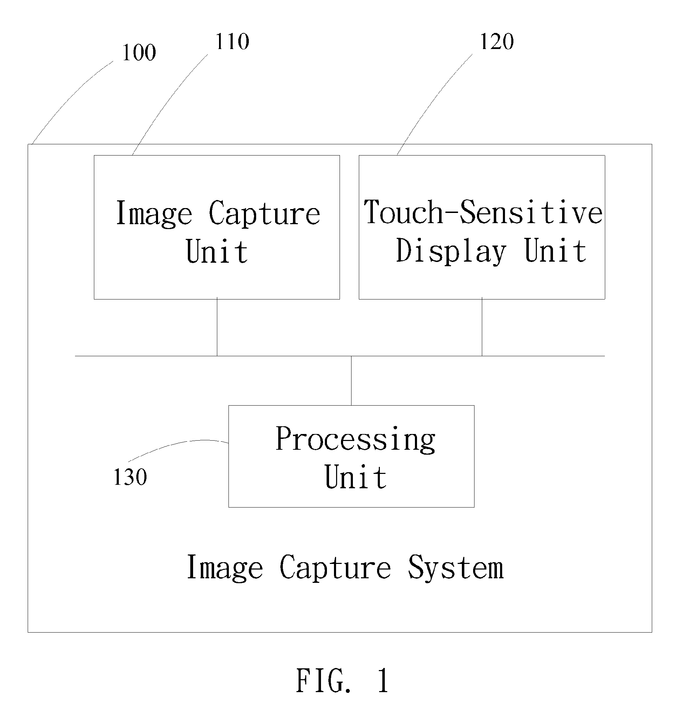

Fig. 1 is a schematic diagram illustrating an embodiment of an image capture system of the invention. The image capture system 100 can be used in an electronic device having image capture capability, such as a digital camera, or a picture-taking handheld device such as a mobile phone, a smart phone, a PDA (Personal Digital Assistant), and a GPS (Global Positioning System).

The image capture system 100 comprises an image capture unit 110, a touch-sensitive display unit 120, and a processing unit 130. The image capture unit 110 may be a CCD (Charge Coupled Device) or a CMOS (Complementary Metal-Oxide Semiconductor), placed at the imaging position for objects inside the electronic device. The touch-sensitive display unit 120 may be a screen integrated with a touch-sensitive device (not shown). The touch-sensitive device has a touch-sensitive surface comprising sensors in at least one dimension to detect contact and movement of an input tool, such as a stylus or finger on the touch-sensitive surface. That is, users can directly input related data via the touch-sensitive display unit 120. Also, the touch-sensitive display unit 120 can display related figures and interfaces, and related data, such as the preview images continuously captured by the image capture unit 110, and the image captured by the image capture unit 110 during a photography process. It is noted that, the preview image is not actually stored in a storage unit of the electronic device. It is understood that, the image data captured by the image capture unit 110 can be permanently or temporarily stored in the storage unit, which may be a built-in memory, or an external memory card of the image capture system 100. The processing unit 130 can control related components of the image capture system 100, process the preview images continuously captured by the image capture unit 110, and/or the image captured by the image capture unit 110 during the photography process, and perform the image capture methods of the invention, which will be discussed further in the following paragraphs. It is noted that, the image capture system 100 can further comprise a focus unit (not shown in Fig. 1). The processing unit 130 can control the focus unit to perform a focus process for at least one object during a photography process.

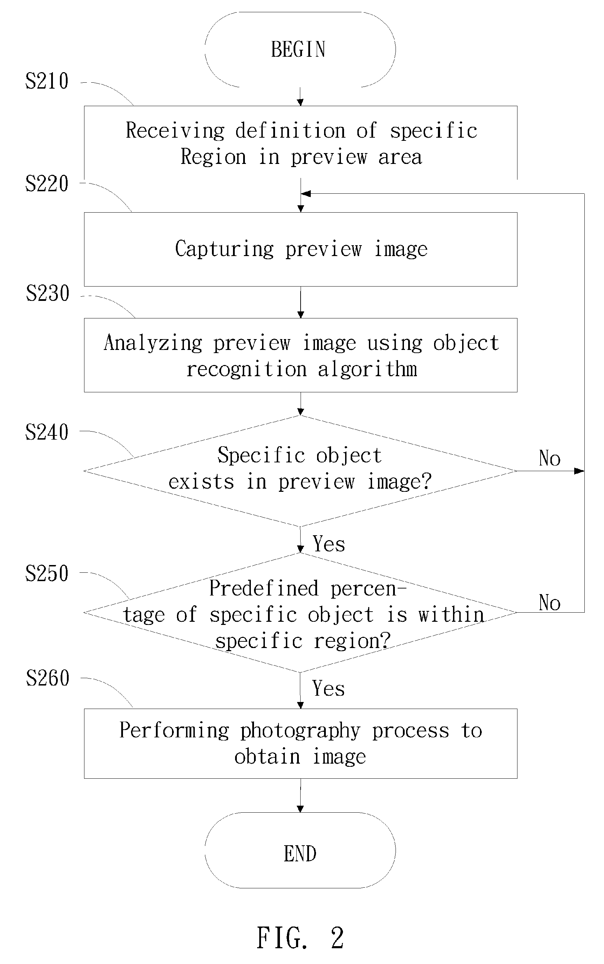

Fig. 2 is a flowchart of an embodiment of an image capture method of the invention. The image capture method can be used in an electronic device having image capture capability, such as a digital camera, or a picture-taking handheld device such as a mobile phone, a smart phone, a PDA, and a GPS.

In step S210, a definition of a specific region in a preview area is received. It is noted that, the electronic device may install a specific application for the image capture method of the invention. Once the specific application is activated, users can start to input the definition of a specific region in the preview area of the touch-sensitive display unit. It is understood that, the touch-sensitive display unit may have a display area, which can be used to display preview images. The display area can be called as the preview area. As described, users can directly input related data via the touch-sensitive display unit 120. In some embodiments, the specific region can be defined on the touch-sensitive display unit of the electronic device via an input tool, such as a stylus or finger. It is understood that, the shape of the specific region can be various. In some embodiments, the shape of the specific region can be circle or rectangle. Once the shape, size, and position of the specific region are defined via the touch-sensitive display unit, related definitions of the specific region are stored in the electronic device. In step S220, at least one preview image is captured via the image capture unit of the electronic device. In step S230, the preview image is analyzed using an object recognition algorithm. It is understood that, the object recognition algorithm is used to recognize whether a specific object is within the preview image. Similarly, the shape, size, and position of the recognized specific object can be stored in the electronic device. In some embodiments, the specific object may be a human face. It is understood that, the human face is example of the present embodiment, and the specific object of the invention is not limited thereto. In step S240, it is determined whether a specific object exists in the preview image. If no specific object is found in the preview image (No in step S240), the procedure returns to step S220. If a specific object exists in the preview image (Yes in step S240), in step S250, it is determined whether at least a predefined percentage of the specific object is within the specific region. In some embodiments, the predefined percentage can be set as 95%. That is, when 95% of the recognized specific object is within the specific region, step S250 is determined as Yes. It is understood that, the predefined percentage can be set according to various applications and requirements, and the present invention is not limited thereto. If the percentage of the specific object appeared within the specific object is not greater than the predefined percentage (No in step S250), the procedure returns to step S220. If at least the predefined percentage of the specific object is within the specific region (Yes in step S250), in step S260, the electronic device is enabled to perform a photography process to obtain an image via the image capture unit.

It is understood that, in some embodiments, a predefined time, such as two or ten seconds can be delayed before the performance of the photography process. After the predefined time, the electronic device performs the photography process via the image capture unit. It is noted that, in some embodiments, the photography process may comprise an auto-focusing process, thus to locate at least one object, such as the recognized specific object in the preview image, and set at least one focus point. The photography process can be performed based on the focus point. It is understood that, the setting of the focus point may vary according to different requirements and applications.

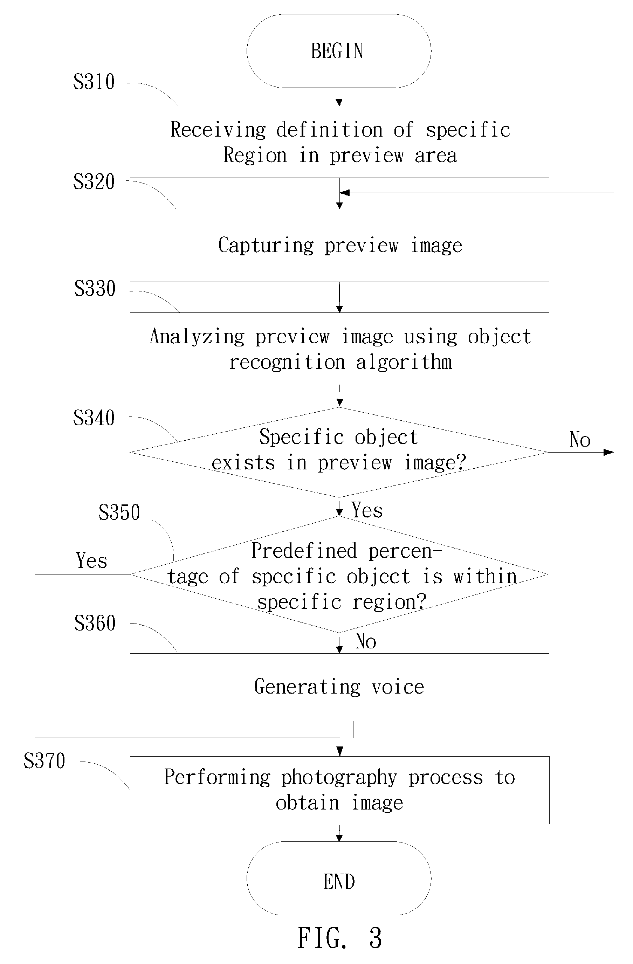

Fig. 3 is a flowchart of another embodiment of an image capture method of the invention. The image capture method can be used in an electronic device having image capture capability, such as a digital camera, or a picture-taking handheld device such as a mobile phone, a smart phone, a PDA, and a GPS. In the embodiment, voices can be generated to assist users in positioning.

In step S310, a definition of a specific region in a preview area is received. Similarly, the electronic device may install a specific application for the image capture method of the invention. Once the specific application is activated, users can start to input the definition of a specific region in the preview area of the touch-sensitive display unit. In some embodiments, the specific region can be defined on the touch-sensitive display unit of the electronic device via an input tool, such as a stylus or finger. It is understood that, the shape of the specific region can be various. In some embodiments, the shape of the specific region can be circle or rectangle. Once the shape, size, and position of the specific region are defined via the touch-sensitive display unit, related definitions of the specific region are stored in the electronic device. In step S320, at least one preview image is captured via the image capture unit of the electronic device. In step S330, the preview image is analyzed using an object recognition algorithm. Similarly, the object recognition algorithm is used to recognize whether a specific object is within the preview image. The shape, size, and position of the recognized specific object can be stored in the electronic device. In some embodiments, the specific object may be a human face. It is understood that, the human face is example of the present embodiment, and the specific object of the invention is not limited thereto. In step S340, it is determined whether a specific object exists in the preview image. If no specific object is found in the preview image (No in step S340), the procedure returns to step S320. If a specific object exists in the preview image (Yes in step S340), in step S350, it is determined whether at least a predefined percentage of the specific object is within the specific region. In some embodiments, the predefined percentage can be set as 95%. That is, when 95% of the recognized specific object is within the specific region, step S250 is determined as Yes. Similarly, the predefined percentage can be set according to various applications and requirements, and the present invention is not limited thereto. If the percentage of the specific object appeared within the specific object is not greater than the predefined percentage (No in step S350), in step S360, voices are generated based on the percentage of the specific object appeared in the specific region. For example, in some embodiments, the voice may be a beep sound. The frequency of the beep sound may be higher when the appearance percentage of the specific object appeared in the specific region is higher. When the appearance percentage of the specific object appeared in the specific region reaches the predefined percentage, the beep sound may be a long beep sound, or sustained. In some embodiments, the voice can be generated based on the position of the specific object. In the embodiment, a generated voice which can instruct users how to position. For example, a voice likes "move right", "move left", "move forward", or "move backward". Then, the procedure returns to step S320. If at least the predefined percentage of the specific object is within the specific region (Yes in step S350), in step S370, the electronic device is enabled to perform a photography process to obtain an image via the image capture unit.

Similarly, in some embodiments, a predefined time, such as two or ten seconds can be delayed before the performance of the photography process. After the predefined time, the electronic device performs the photography process via the image capture unit. Similarly, in some embodiments, the photography process may comprise an auto-focusing process, thus to locate at least one object, such as the recognized specific object in the preview image, and set at least one focus point. The photography process can be performed based on the focus point. It is understood that, the setting of the focus point may vary according to different requirements and applications.

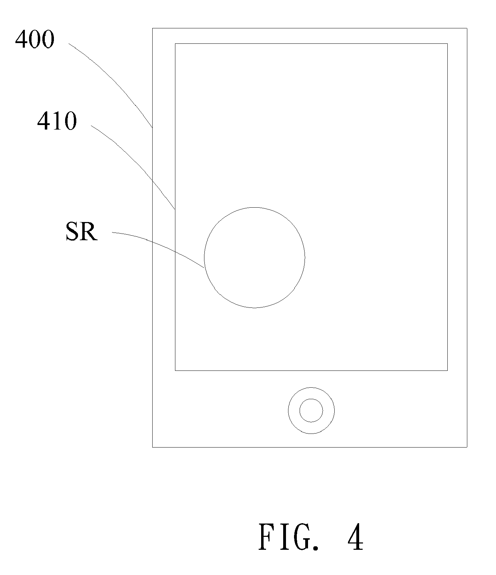

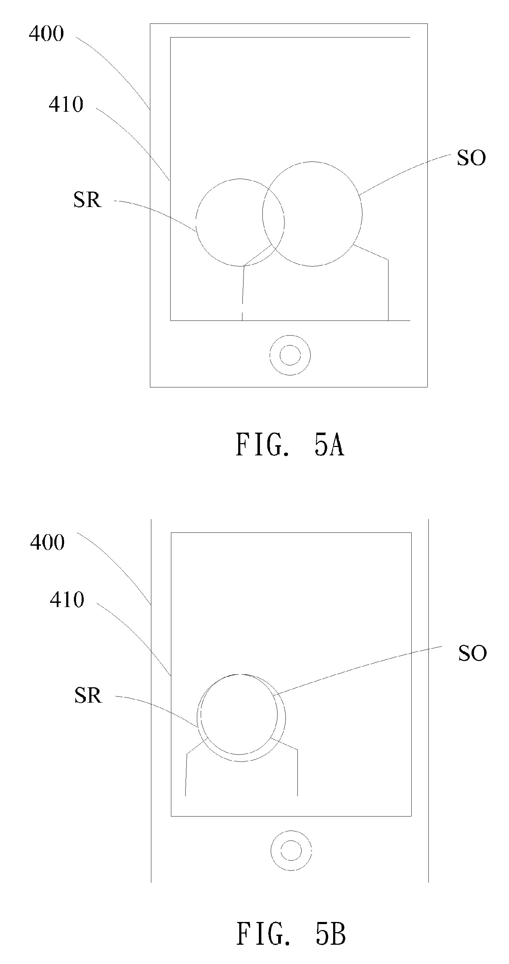

Fig. 4 is a schematic diagram illustrating an example of specific region defined in the preview area. After the application for the image capture method of the invention is activated, a user can use an input tool to define a specific region SR in the preview area of the touch-sensitive display unit 410 of the electronic device 400. Then, the user can be posed in the front of the camera, as shown in Fig. 5A. Once a preview image is captured, the specific object SO can be recognized, and the shape, size, and position of the specific object SO can be matched with the shape, size, and position of the specific region SR. If the percentage of the specific object SO appeared within the specific region SR is not greater than the predefined percentage, such as 95%, a voice, such as a beep sound can be generated to assist the user in positioning. As described, the frequency of the beep sound may be higher when the appearance percentage of the specific object appeared in the specific region is higher. In Fig. 5A, the percentage of the specific object SO appeared within the specific region SR is not greater than the predefined percentage, another preview image is further captured and analyzed, as shown in Fig. 5B. When the appearance percentage of the specific object appeared in the specific region reaches the predefined percentage, the beep sound may be a long beep sound, or sustained, and electronic device is enabled to perform a photography process to obtain an image via the image capture unit. Similarly, the electronic device can delay a predefined time, such as two or ten seconds before the performance of the photography process. After the predefined time, the electronic device performs the photography process via the image capture unit. Similarly, the electronic device can perform an auto-focusing process, thus to locate at least one object, such as the recognized specific object in the preview image, and set at least one focus point. The photography process can be performed based on the focus point.

Therefore, the image capture methods and systems can automatically capture images when at least one object is positioned at a region predefined in the preview area, thus increasing operational convenience, and reducing power consumption of electronic devices for complicated operations.

Image capture methods, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. An image capture method for use in an electronic device, comprising:
defining a specific region in a preview area;
capturing at least one preview image via an image capture unit of the electronic device;
determining whether a specific object exists in the preview image using an object recognition algorithm;
if a specific object exists in the preview image, determining whether at least a predefined percentage of the specific object is within the specific region;
if at least the predefined percentage of the specific object is within the specific region, enabling the electronic device to perform a photography process to obtain an image via the image capture unit.

2. The method of claim 1, wherein the specific region is defined on a touch-sensitive display unit of the electronic device via an input tool.

3. The method of claim 1 or 2, wherein the specific object comprises a face, and the object recognition algorithm is used to recognize whether at least a face is within the preview image.

4. The method of any one of the preceding claims, further comprising generating voices based on an appearance percentage of the specific object appeared in the specific region.

5. The method of claim 4, wherein the voice comprises a beep sound, a frequency of the beep sound is higher when the appearance percentage is higher, and when the appearance percentage reaches the predefined percentage, the beep sound is sustained.

6. The method of any one of the preceding claims, further comprising:
if at least the predefined percentage of the specific object is within the specific region, delaying a predefined time; and
performing the photography process to take the image after the predefined time passes.

7. The method of any one of the preceding claims, further comprising:
detecting a focus point during the photography process; and
taking the image based on the focus point.

8. An image capture system for use in an electronic device, comprising:
an image capture unit capturing at least one preview image; and
a processing unit receiving a definition of a specific region in a preview area, determining whether a specific object exists in the preview image using an object recognition algorithm, determining whether at least a predefined percentage of the specific object is within the specific region if a specific object exists in the preview image, and enabling the electronic device to perform a photography process to obtain an image via the image capture unit if at least the predefined percentage of the specific object is within the specific region.

9. The system of claim 8, further comprising a touch-sensitive display unit, wherein the specific region is defined via the touch-sensitive display unit via an input tool.

10. The system of claim 8 or 9, wherein the specific object comprises a face, and the object recognition algorithm is used to recognize whether at least a face is within the preview image.
